# DEMANDE DE BREVET EUROPEEN

(11) **EP 0 708 348 A1**
(43) Date de publication de la demande: **24.04.1996**
(21) Numéro de dépôt: 95402220.8
(22) Date de dépôt: 05.10.1995
(51) Int. Cl.: G02B 6/44, B23K 26/00, H01B 13/26

(54) **Ensemble de protection contre l'échauffement interne d'un tube métallique contenat au moins une fibre optique et procédé de mise en oeuvre**

(30) Priorité: 07.10.1994 FR 9411998
(71) Demandeur: ALCATEL SUBMARCOM, F-92110 Clichy (FR)
(72) Inventeur: Marlier, Gery, F-62100 Calais (FR); Picavet, Albert, F-62100 Calais (FR)
(74) Mandataire: Buffiere, Michelle

(57) **Abrégé**

L'ensemble de protection contre l'échauffement interne d'un tube métallique contenant au moins une fibre optique limite l'échauffement des fibres insérées par un tube auxiliaire et du gel de remplissage, au droit de la fermeture par soudure laser du tube métallique.

Il est caractérisé en ce qu'il comporte un diffuseur thermique (15) interposé entre le tube auxiliaire (10) d'insertion des fibres (11) et la zone de fermeture définie sur le tube métallique (6).

Application : Câble optique sous-marin.

## Description

La présente invention se rapporte à la fabrication en continu d'un tube métallique étanche contenant au moins une fibre optique. Elle porte plus particulièrement sur un ensemble de protection contre l'échauffement interne d'un tel tube métallique, destiné à limiter la transmission vers l'intérieur du tube de la chaleur reçue pour sa fermeture en long, et sur un procédé de mise en oeuvre de cet ensemble.

Les fibres optiques de transmission, destinées en particulier à un câble optique sous-marin, sont de manière courante mises sous tube métallique, par exemple en acier, assurant une protection mécanique et une étanchéité autour de chaque fibre ou de l'ensemble des fibres optiques intérieures, dans la structure du câble.

L'opération de mise sous tube métallique d'une ou de fibres optiques est en tant que telle connue. Elle est décrite notamment dans le document EP-A-O299 123.

Elle consiste à déformer un ruban métallique plat pour le mettre sous forme de tube ouvert, à guider la fibre optique dans le tube ouvert et à fermer en long le tube autour de la fibre, par soudure laser des bords de l'ouverture. Le guidage de la fibre dans le tube métallique est assuré par un tube auxiliaire, qui pénètre dans le tube métallique ouvert et s'étend dans ce dernier au-delà de sa fermeture au laser.

Selon le document FR-A-2 517 073, le tube de guidage de fibre optique peut en outre assurer l'introduction d'une matière d'amortissement dans le tube métallique, par exemple un gel de remplissage dans lequel est noyée la fibre dans le tube métallique fermé. Ce tube de guidage est simple pour introduire simultanément la fibre et la matière de remplissage dans le tube métallique ou est à deux parois concentriques pour l'introduction séparée de la fibre par le canal central et la matière de remplissage par le canal annulaire périphérique. Le tube de guidage est en matériau susceptible de supporter des températures élevées de fermeture du tube métallique.

Le matériau du tube de guidage peut être composite et comporter un matériau externe de faible conductibilité thermique et un matériau interne de conductibilité thermique élevée, de manière que l'énergie thermique reçue et dégagée par le point de fermeture ne soit pratiquement pas transmise à la ou les fibres optiques intérieures et/ou à la matière d'amortissement.

Un tel tube de guidage est cher et de réalisation délicate. Il n'assure pas toujours une protection suffisante de l'intérieur du tube métallique, pour limiter convenablement l'échauffement intérieur du tube métallique, en particulier lorsque sa fermeture est assurée par soudure au laser. Il ne permet pas en particulier d'éviter de manière certaine une génération d'hydrogène dans le gel de remplissage, venant alors perturber les caractéristiques de transmission des fibres optiques et augmenter l'atténuation du signal optique transmis.

Selon le document US-A 4 811 888, le tube métallique est refroidi immédiatement après la soudure en long du tube, pour réduire aussi vite que possible l'échauffement du tube métallique. Ce refroidissement s'avère utile mais insuffisant.

Une autre solution connue pour éviter les effets néfastes de l'échauffement du gel de remplissage, dû à la soudure du tube, consiste à y intégrer un élément chimique absorbant les molécules d'hydrogène générées. Cette solution est efficace mais très onéreuse.

La présente invention a pour but d'éviter les inconvénients des solutions connues ci-avant, en assurant de manière simple une protection thermique des fibres optiques et de l'éventuel gel de remplissage du tube métallique.

Elle a pour objet un ensemble de protection contre l'échauffement interne d'un tube métallique contenant au moins une fibre optique, associé à un poste fixe de soudure au laser définissant une zone de fermeture sur ledit tube métallique entraîné en regard dudit poste et à un premier tube auxiliaire assurant le guidage et l'insertion de chaque fibre dans ledit tube métallique et s'étendant dans celui-ci au-delà de ladite zone de fermeture, caractérisé en ce que qu'il comporte un diffuseur thermique monté dans ledit tube métallique et interposé entre ledit premier tube auxiliaire et ladite zone de fermeture définie sur ledit tube métallique au droit dudit poste de soudure au laser.

Cet ensemble présente avantageusement en outre au moins une des caractéristiques additionnelles suivantes :
- ledit ensemble est associé en outre à au moins un deuxième tube auxiliaire, assurant l'injection d'une matière de remplissage dans ledit tube métallique et s'étendant également au-delà de ladite zone de fermeture, et est caractérisé en en ce que ledit diffuseur thermique est porté par chaque deuxième tube auxiliaire et disposé directement en regard de ladite zone de fermeture;
- ledit diffuseur thermique est fixé sur deux deuxièmes tubes auxiliaires s'étendant côte à côte et séparant ledit premier tube auxiliaire et ledit diffuseur thermique l'un de l'autre;
- ledit ensemble comporte en outre un dispositif de refroidissement externe dudit tube métallique, monté directement en aval dudit poste de soudure au laser.

L'invention porte également sur un procédé de mise en oeuvre dudit ensemble, ledit tube métallique étant formé à partir d'un ruban métallique plat initial déformé, caractérisé en ce qu'il consiste à donner au tube métallique entraîné en regard dudit poste de soudure au laser une section de valeur supérieure à celle d'une section finale souhaitée et de forme ovoïdale présentant une première moitié dite supérieure sensiblement circulaire, sur laquelle est centrée ladite zone de fermeture, et une deuxième moitié dite inférieure sensiblement en V, à fond semi-circulaire de rayon inférieur à celui de ladite première moitié et sensiblement égal à celui dudit premier tube auxiliaire s'y logeant, et à réduire et rendre circulaire la section ovoïdale, au-delà du niveau de l'extrémité de chaque tube auxiliaire dans ledit tube métallique.

Les caractéristiques et avantages de la présente invention ressortiront de la description faite ci-après d'un exemple de réalisation illustré dans les dessins ci-annexés. Dans ces dessins :
- La figure 1 est une vue schématique et partielle d'une ligne de mise sous tube métallique de fibres optiques, équipée d'un ensemble de protection, selon l'invention, pour limiter l'échauffement interne du tube métallique, lié à sa fermeture,
- la figure 2 est une vue en coupe dudit tube métallique, faite au droit de sa fermeture.

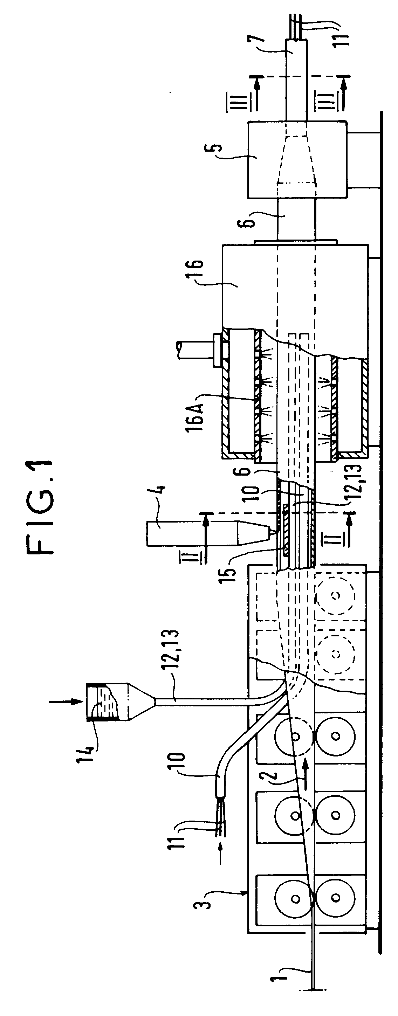

En se référant à la figure 1, un ruban plat 1 en inox défile en continu selon la flèche 2 à travers un ensemble 3 de jeux de rouleaux le déformant progressivement pour le mettre en forme de tube, puis en regard d'une torche de soudure laser 4 assurant la fermeture étanche en long du tube métallique et à travers une filière 5 de mise en forme finale du tube fermé.

Ce ruban plat est prélevé d'un rouleau de stockage non représenté et est bien entendu dégraissé convenablement avant d'être mis en forme de tube. On indique en outre qu'il est entraîné selon la flèche 2 par un moyen situé en amont de l'ensemble 3 des jeux de rouleaux de déformation et par un moyen situé en aval de la filière 5 de mise en forme finale ou constitué par cette filière. Le tube à la sortie de la filière 5 est stocké sur une bobine de réception.

Pour une meilleure compréhension, le tube fermé par la torche laser 4 est désigné sous la référence 6 et le tube final obtenu à la sortie de la filière 5 est désigné sous la référence 7.

Un premier tube auxiliaire 10 de type tube capillaire est affecté au guidage et à l'insertion de fibres optiques 11 dans le tube métallique 6.

Ce tube auxiliaire rentre, en un point intermédiaire des jeux de rouleaux de l'ensemble 3, dans le tube encore largement ouvert à ce niveau. Il s'étend à l'intérieur du tube fermé 6, au-delà de la zone de fermeture par la torche laser 4.

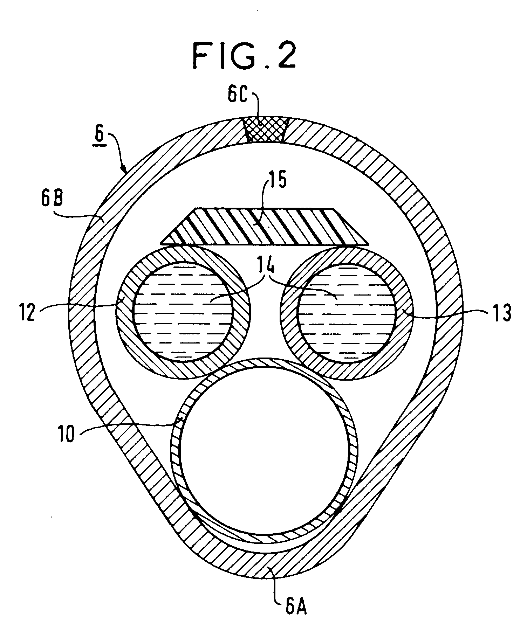

Un deuxième tube auxiliaire 12, de type tube capillaire, ou de préférence deux deuxièmes tubes auxiliaires identiques 12 et 13 ainsi que visible dans la figure 2, rentrent également dans le tube encore largement ouvert et s'étendent côte à côte dans le tube fermé 6 jusqu'au delà de la zone de fermeture par la torche laser. Ils sont affectés à l'injection d'un gel de remplissage 14 dans le tube 6, dans lequel les fibres seront totalement noyées dans le tube final 7 obtenu.

Ces tubes 10, 12 et 13 sont de préférence en inox.

En se référant également à la figure 2, on voit que l'ensemble de protection contre l'échauffement intérieur du tube métallique 6, au niveau de la torche laser, comporte essentiellement un diffuseur thermique 15, intérieur au tube métallique et situé entre d'une part les tubes auxiliaires 10 et 12 et d'autre part la zone de fermeture du tube métallique 6. Ce diffuseur s'étend en largeur et en longueur de part et d'autre de la zone de fermeture. Il est de préférence constitué par une plaque en matériau bon conducteur thermique, en particulier en cuivre. Il est fixé aux deux deuxièmes tubes capillaires 12 et 13 d'injection de gel de remplissage, en étant par exemple soudé à ceux-ci, en regard de la zone de fermeture et donc à l'opposé du tube capillaire 10 de guidage et d'insertion des fibres, ce dernier étant au-dessous des tubes auxiliaires 12 et 13 dans le tube métallique 6.

Ce diffuseur, qui reçoit l'énergie provenant de la torche laser sur une zone dite d'impact, répartit cette énergie sur toute sa surface et toute son épaisseur. Ceci a pour effet d'abaisser la valeur maximale de température de la zone d'impact, par rapport à un système de fermeture ayant une torche laser de même énergie mais n'ayant pas un tel diffuseur. Cette valeur maximale reste ainsi en deçà du seuil de température à partir duquel se déclenche le phénomène de génération d'hydrogène dans le gel de remplissage.

Cet ensemble de protection comporte en outre avantageusement un dispositif extérieur 16 de refroidissement du tube métallique 6, situé juste en aval de la torche de soudure laser 4, ainsi qu'illustré dans la figure 1. Ce dispositif consiste une enceinte annulaire montée autour du tube métallique 6 et équipée de rampes 16A d'arrosage ou de ventilation forcée de la périphérie du tube métallique, tout au moins de la ligne de fermeture et des portions périphériques de part et d'autre de cette ligne. Il peut en variante être constitué par une enceinte traversée par le tube métallique, dans laquelle est créée une circulation de fluide de refroidissement et/ou sont prévues une ou des rampes de refroidissement.

Cet ensemble de protection, à diffuseur interne au droit de la torche laser et à refroidissement externe en aval de cette dernière, permet l'utilisation d'un gel de remplissage standard et non additionné d'élément chimique absorbant d'hydrogène. Il permet une protection suffisante, évitant la génération de molécules d'hydrogène dans le gel. Il permet une excellente protection des fibres optiques dans leur tube auxiliaire maintenu en dessous des deux tubes auxiliaires 12 et 13 et du diffuseur et ainsi très éloigné de la zone de fermeture du tube métallique. Il évite ainsi des dégradations des fibres et par là une augmentation résultante d'atténuation optique des signaux transmis ultérieurement. Il permet ainsi la réalisation en continu et à vitesse élevée d'une longueur très importante de tube métallique contenant les fibres optiques noyées dans le gel de remplissage, pour l'utilisation de ce tube dans un câble optique sous-marin de liaison grande distance.

En outre, ainsi que représenté dans la figure 2, pour une mise en oeuvre particulièrement efficace de l'ensemble de protection et plus spécialement du diffuseur thermique 15, on donne au tube 6 formé à partir du ruban plat initial et fermé par la torche laser une section qui est d'une part plus grande que celle souhaitée pour le tube final 7, et d'autre part de forme ovoïdale et non pas de forme circulaire souhaitée pour le tube final 7 à la sortie de la filière 5 de la figure 1. Ce tube final est rendu de section circulaire et réduite dans la filière située au-delà du niveau de l'extrémité de chacun des tubes auxiliaires 10, 12 et 13 dans le tube métallique.

Le tube 6 présente, en section, une moitié dite inférieure 6A, qui est sensiblement en forme de V à fond arrondi et de rayon très peu supérieur à celui du tube auxiliaire 10 et dans laquelle se loge ce tube auxiliaire 10 venant en appui sensiblement dans le fond de ce V, et une moitié dite supérieure 6B sur laquelle est centrée la ligne de fermeture 6F du tube et qui est également sensiblement circulaire mais de rayon nettement supérieur à celui de la portion inférieure. Les tubes auxiliaires 12 et 13 se logent sensiblement dans la partie médiane du tube métallique 6, en reposant sur la périphérie du tube auxiliaire 10.

Le diffuseur thermique 15 fixé sur les tubes auxiliaires 12 et 13 est ainsi relativement distant de la ligne de fermeture réalisée par la torche laser et éloigne en conséquence les tubes auxiliaires 12 et 13 et le tube auxiliaire 10 de la zone de fermeture.

## Revendications

1. Ensemble de protection contre l'échauffement interne d'un tube métallique contenant au moins une fibre optique, associé à un poste fixe de soudure au laser définissant une zone de fermeture sur ledit tube métallique entraîné en regard dudit poste et à un premier tube auxiliaire assurant le guidage et l'insertion de chaque fibre dans ledit tube métallique et s'étendant dans celui-ci au-delà de ladite zone de fermeture, caractérisé en ce que qu'il comporte un diffuseur thermique (15), monté dans ledit tube métallique (6) et interposé entre ledit premier tube auxiliaire (10) et ladite zone de fermeture définie sur ledit tube métallique (6) au droit dudit poste de soudure au laser (4).

2. Ensemble selon la revendication 1, associé en outre à au moins un deuxième tube auxiliaire assurant l'injection d'une matière de remplissage dans ledit tube métallique et s'étendant également au-delà de ladite zone de fermeture, caractérisé en ce que ledit diffuseur thermique (15) est porté par chaque deuxième tube auxiliaire (12, 13) et disposé directement en regard de ladite zone de fermeture.

3. Ensemble selon la revendication 2, caractérisé en ce que ledit diffuseur thermique (15) est fixé sur deux deuxièmes tubes auxiliaires (12, 13) s'étendant côte à côte et séparant ledit premier tube auxiliaire (10) et ledit diffuseur thermique (15) l'un de l'autre.

4. Ensemble selon l'une des revendications 1 à 3, caractérisé en ce que ledit diffuseur thermique (15) est une plaque en matériau bon conducteur thermique.

5. Ensemble selon l'une des revendications 1 à 4, caractérisé en ce qu'il comporte en outre un dispositif de refroidissement externe (16) dudit tube métallique (6), monté directement en aval dudit poste de soudure au laser (4).

6. Procédé de mise en oeuvre dudit ensemble selon l'une des revendications 1 à 5, ledit tube métallique étant formé à partir d'un ruban métallique plat initial déformé, caractérisé en ce qu'il consiste à donner au tube métallique (6) entraîné en regard dudit poste de soudure au laser une section de valeur supérieure à celle d'une section finale souhaitée et de forme ovoïdale présentant une première moitié dite supérieure (6B) sensiblement circulaire, sur laquelle est centrée ladite zone de fermeture (6F), et une deuxième moitié dite inférieure (6A) sensiblement en V, à fond semi-circulaire de rayon inférieur à celui de ladite première moitié et sensiblement égal à celui dudit premier tube auxiliaire (10) s'y logeant, et à réduire et rendre circulaire la section ovoïdale, au-delà du niveau de l'extrémité de chaque tube auxiliaire (10, 12, 13) dans ledit tube métallique (6).
